Europäisches Patentamt

European Patent Office

Office européen des brevets

(11) Publication number: **0 060 647**
**B1**

## EUROPEAN PATENT SPECIFICATION

(45) Date of publication of patent specification: **09.10.85**

(51) Int. Cl.⁴: **C 09 K 11/59, H 01 J 29/18**

(21) Application number: **82301055.8**

(22) Date of filing: **02.03.82**

(54) Cathode ray tube phosphors.

(30) Priority: **17.03.81 GB 8108245**

(43) Date of publication of application:
**22.09.82 Bulletin 82/38**

(45) Publication of the grant of the patent:
**09.10.85 Bulletin 85/41**

(84) Designated Contracting States:
**DE FR NL**

(56) References cited:
**DE-A-2 035 258
FR-A-2 015 340
US-A-3 368 094
US-A-4 275 333**

**JOURNAL OF VACUUM SCIENCE AND
TECHNOLOGY, vol.13, no.1, January/February
1976, American Institute of Physics, New York
(US), J.M. HURD et al.:"Activation of thin film
An2SiO4 phosphors using ion implantation
techniques", pages 410-413**

The file contains technical information
submitted after the application was filed and
not included in this specification

(73) Proprietor: **The Secretary of State for Defence in
Her Britannic Majesty's Government of The
United Kingdom of Great Britain and
Northern Ireland Whitehall
London SW1A 2HB (GB)**

(72) Inventor: **Robertson, Daniel Stewart
205 Pickersleigh Road
Malvern Worcestershire (GB)**

(74) Representative: **Edwards, John Brian et al
Procurement Executive Ministry of Defence
Patents 1 A (4), Room 2014 Empress State
Building Lillie Road
London SW6 1TR (GB)**

Courier Press, Leamington Spa, England.

**Description**

This invention relates to cathode ray tube (C.R.T.) phosphors.

In a cathode ray tube a visible image is formed on a face plate where a beam of electrons strike a phosphor layer. For many years it was possible to display a single colour only on an oscilloscope or television screen. With the advent of the shadow mask a colour television receiver was possible using three different phosphor dots on the tube face plate in register with each aperture in the shadow mask. The three dots emitted red, blue, and green light when hit by an electron beam. Many improvements have been made to phosphor materials but each colour still requires a different doped material with different emission characteristics for a given beam current.

One use of a cathode ray tube is in aircraft as part of a head up display (HUD) where an image from a cathode ray tube is displayed in front of the pilot and focussed at infinity ahead of the aircraft. Since the displayed image must be observable in bright sunlight, the cathode ray tube image must be capable of high brightness. This requires a high output phosphor with high breakdown strength and long life. Usually the display is coloured green because the human eye is most sensitive to this colour and it is at the eyes natural focus.

According to this invention a cathode ray tube phosphor material is the material $x(ZnO) \cdot Y_2Si_2O_7$, where $1 \geqslant x \geqslant 0.42$ doped with at least one emitting ion selected from the group $Eu^{3+}$, $Tb^{3+}$, $Ce^{3+}$.

The emitting ion is $Eu^{3+}$ to give a red emission, $Tb^{3+}$-green, blue, and red; $Ce^{3+}$-blue. Without an emitting ion the emission is blue.

According to an aspect of this invention a cathode ray tube comprises a tube having a face plated coated internally with the material of claim 1.

According to another aspect of this invention a cathode ray tube comprises a tube having a face plate coated internally with $ZnY_2Si_2O_8$ doped with at least one emitting ion selected from the group $Eu^{3+}$, $Tb^{3+}$, $Ce^{3+}$ in different areas to provide a multi-coloured display.

The differently doped areas may be deposited separately, or an undoped layer of $x(ZnO) \cdot Y_2SiO_7$, where $1 \geqslant x \geqslant 0,42$, may be deposited and the different areas doped through masks.

There is nothing in the prior art to suggest the chemical combination of $ZnO$ and $Y_2Si_2O_7$ and doping the mixture or compound, nor is there any indication that it would have (i) high brightness with high burn resistance and (ii) potential to emit red, green, or blue light.

The invention will now be described by way of example only with reference to the accompanying drawings of which:—

Figure 1 is a schematic view of a cathode ray tube;

Figure 2 is a sectional view of a phosphor layer deposited on a support;

Figure 3 is a part front view of a three colour phosphor layer drawn to an enlarged scale;

Figure 4 is a schematic view of a head up display in an aircraft.

To form the material $x(ZnO) \cdot Y_2Si_2O_7$, $ZnO$ is added to $Y_2Si_2O_7$ above about 10% by molecular weight of $ZnO$ (e.g. $x=0.42$) the phosphor emits strongly. The value of $x=1$ corresponds to about 20% by molecular weight of $ZnO$ in $Y_2Si_2O_7$ i.e. $ZnY_2Si_2O_8$.

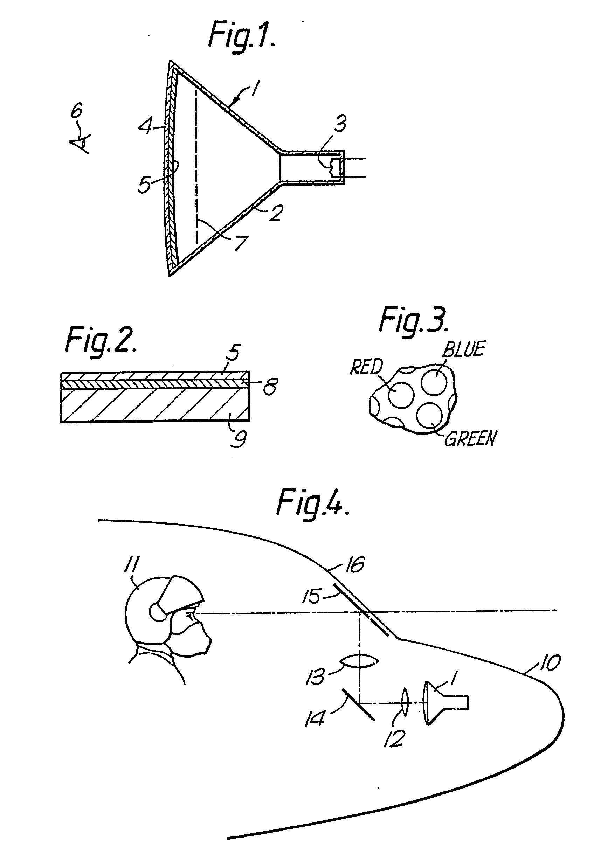

As seen in Figure 1 a cathode ray tube CRT1 comprises an evacuated glass envelope 2 having a cathode structure 3 at one end and a front surface or face plate 4 at the other end. The inner surface of the face plate 4 is coated with a phosphor layer 5. A stream of electrons, of modulated intensity, is swept across the layer 5 causing an image to be displayed to an observer 6.

When the CRT1 is part of a colour television receiver a shadow mask 7 is arranged behind the face plate 4 and electrons pass through apertures in the shadow mask 7 before striking the phosphor 5.

The phosphor coating 5 may be formed as follows:— oxides of zinc, yttrium, and silica, with or without an emitting ion are mixed and milled together to give a particle size around 50 μm. The mixture is fired at about 1,350°C for around 8 hours. This produces the material $x(ZnO) \cdot Y_2Si_2O_7$ which is then milled and sieved through a 10 μm filter to give a fine powder. The powder is mixed with dry alcohol and poured onto the face plate where the alcohol evaporates off; heating to 400°C for around 30 minutes hardens the coating.

For a single colour cathode ray tube an emitting ion such as $Tb^{3+}$, is mixed into the phosphor as noted above and a single complete phosphor layer formed.

Alternatively where a colour television receiver is to be made three differently doped mixtures are prepared for deposition as small dots on the face plate 4. The dots are arranged in groups of threes, Figure 3, each dot in a group having one of the primary colours, red, blue, green. Each dot is formed through holes in a mask (not shown) onto the face plate 4 by settling (or centrifuging) a powder and alcohol mix. The single colour dot is then dried. Each dot in a group is formed separately through an appropriate mask.

As an alternative to mixing with dry alcohol the fine powder may be mixed with a solvent, or binder, such as polyvinyl alcohol (PVA) and the liquid screen printed onto the face plate.

An alternative way Figure 2 of producing differently doped areas on a face plate is to form an undoped layer 5 of the host $x(ZnO) \cdot Y_2Si_2O_7$ onto a platinum foil 8 supported on an alumina support 9 e.g. by settling from a dry alcohol suspension and firing at 1,350°C for 8 hours. A photo lithographic mask is formed on the layer and an activator powder suspension poured onto the mask and fired at 1,350°C. This dopes the host at

2

0 060 647

positions where holes in the mask allow diffusion of the emitting ion and host. The mask is removed and the process repeated for the two other emitting ions (two other primary colours).

The result is a $x(ZnO) \cdot Y_2Si_2O_7$ ceramic, doped to give discrete areas of red, blue, and green emissions. This ceramic 5 is removed from the foil 8 and attached to the face plate 4 to a tube 1.

Figure 4 shows a head up display (HUD) in an aircraft 10. The display comprises a CRT1 which emits light towards a pilot 11 via lenses 12, 13 a fully reflecting mirror 14, and a partially reflecting mirror 15 behind the aircraft canopy 16. The CRT1 image is focussed at infinity and is observed by the pilot 11 looking forward through the canopy 16 in the usual manner.

Details of emission of phosphors according to this invention are as follows and are compared with standard phosphors.

| Emitting ions | Emission as % of standard | Standard |
|---|---|---|
| $Eu^{3+}$ (red) | 50 | yttrium vanadate ($Eu^{3+}$) |
| $Tb^{3+}$ (green) | 400 | P1 (Jedec) zinc silicate ($Mn^{2+}$) |
| $Tb^{3+}$ (blue) | 100 | P11 (Jedec) |
| $Ce^{3+}$ (blue) | 60 | P11 (Jedec) zinc sulphide ($Ag^+$) |
| Undoped (blue) | 5 | P11 (Jedec) zinc sulphide ($Ag^+$) |

In one series of experiments the amounts of activator were as follows:—

| Emitting ions | Amount | Range |
|---|---|---|
| $Eu^{3+}$ (red) | 1.0% wt/wt | 615, 625 µm (peaks) |
| $Ce^{3+}$ (blue) | 0.5% wt/wt | 415 µm (peak) 350—500 µm |
| $Tb^{3+}$ (green) | 0.25% wt/wt | 555 µm (peak) |
| $Tb^{3+}$ (blue) | 0.25% wt/wt | 387 µm (peak) |
| $Tb^{3+}$ (blue) | 0.25% wt/wt | 440 µm (peak) |
| $Tb^{3+}$ (blue) | 0.25% wt/wt | 450 µm (peak) |
| $Tb^{3+}$ (red) | 0.25% wt/wt | 590 µm (peak) |

**Claims**

1. A cathode ray tube phosphor material having the formula $x(ZnO) \cdot Y_2Si_2O_7$ where $1 \geqslant x \geqslant 0.42$, doped with at least one emitting ion selected from the group $Eu^{3+}$, $Tb^{3+}$, $Ce^{3+}$.

2. The phosphor of claim 1 wherein the amount of emitting ions is up to 1% weight/weight.

3. A cathode ray tube comprising a tube having a face plate coated internally with the material of claim 1.

4. A cathode ray tube as claimed in claim 3 wherein the coating is doped with different emitting ions in different areas of the face plate.

5. A cathode ray tube as claimed in claim 3 wherein the coating is deposited with differently doped emitting ions in different areas of the face plate.

6. A cathode ray tube comprising a tube having a face plate coated internally with a layer of $ZnY_2Si_2O_8$ doped with at least one emitting ion selected from the group $Eu^{3+}$, $Tb^{3+}$, $Ce^{3+}$.

**Revendications**

1. Une substance luminescente pour tube à rayons cathodiques ayant pour formule $x(ZnO) \cdot Y_2Si_2O_7$ dans laquelle $1 \geqslant x \geqslant 0,42$, dopée avec au moins un ion émetteur choisi dans le groupe $Eu^{3+}$, $Tb^{3+}$ et $Ce^{3+}$.

2. La substance luminescente de la revendication 1 dans laquelle la quantité d'ions émetteurs est d'au plus 1% poids/poids.

3. Un tube à rayons cathodiques comprenant un tube ayant une plaque frontale dont l'intérieur est revêtu de la substance de la revendication 1.

3

# 0 060 647

4. Un tube à rayons cathodiques comme revendiqué dans la revendication 3 dans lequel le revêtement est dopé avec des ions émetteurs différents dans des régions différentes de la plaque frontale.

5. Un tube à rayons cathodiques comme revendiqué dans la revendication 3 dans lequel le revêtement est déposé avec des ions émetteurs dopants différents dans des régions différentes de la plaque frontale.

6. Un tube à rayons cathodiques comprenant un tube ayant une plaque frontale dont l'intérieur est revêtu d'une couche de $ZnY_2Si_2O_8$ dopée avec au moins un ion émetteur choisi dans le groupe $Eu^{3+}$, $Tb^{3+}$ et $Ce^{3+}$.

**Patentansprüche**

1. Leuchtstoff für Katodenstrahlröhren mit der Formel $x(ZnO) \cdot Y_2Si_2O_7$, wobei $1 \times 0,42$ und das Material mit mindestens einem emittierenden Ion aus der Gruppe $Eu^{3+}$, $Tb^{3+}$, $Ce^{3+}$ dotiert ist.

2. Leuchtstoff nach Anspruch 1, bei welchem die Menge der emittierenden Ionen bis zu 1 Gewichtsprozent beträgt.

3. Katodenstrahlröhre mit einem Röhrenkörper, dessen Frontschirm mit dem Leuchtstoff nach Anspruch 1 innenbeschichtet ist.

4. Katodenstrahlröhre nach Anspruch 3, bei welcher die Beschichtung in verschiedenen Bereichen des Frontschirms mit verschiedenen emittierenden Ionen dotiert ist.

5. Katodenstrahlröhre nach Anspruch 3, bei welcher die Beschichtung mit in verschiedenen Bereichen des Frontschirms verschieden dotierten emittierenden Ionen aufgebracht ist.

6. Katodenstrahlröhre mit einem Röhrenkörper, dessen Frontschirm mit einer Schicht aus mit mindestens einem emittierenden Ion aus der Gruppe $Eu^{3+}$, $Tb^{3+}$, $Ce^{3+}$ dotiertem $ZnY_2Si_2O_8$ innenbeschichtet ist.

4

Fig.1.

Fig.2.

Fig.3.

BLUE

RED

GREEN

Fig.4.